# EUROPÄISCHE PATENTSCHRIFT

(11) **EP 2 810 855 B1**
(45) Veröffentlichungstag und Bekanntmachung des Hinweises auf die Patenterteilung: **07.09.2016**
(21) Anmeldenummer: 14170763.8
(22) Anmeldetag: 02.06.2014
(51) Int. Cl.: B62D 25/24

(54) **Dichtstopfen**
Sealing stopper
Bouchon étanche

(30) Priorität: 07.06.2013 DE 102013105925
(43) Veröffentlichungstag der Anmeldung: 10.12.2014
(73) Patentinhaber: TRW Automotive Electronics & Components GmbH, 78315 Radolfzell (DE)
(72) Erfinder: Weiler, Tobias, 66877 Ramstein-Miesenbach (DE)
(74) Vertreter: Hauck Patentanwaltspartnerschaft mbB

(56) Entgegenhaltungen:
- EP-A1- 2 377 748
- DE-A1- 2 454 078
- DE-A1-102009 018 395
- DE-U1-202009 003 473

## Beschreibung

Die Erfindung betrifft einen Dichtstopfen zur Abdichtung einer Öffnung in einem Bauteil, insbesondere einem Karosserieteil, mit einem im Wesentlichen ringförmigen oder zylindrischen Schaft, der von einer Dichtfläche geschlossen ist, und einer am Schaft vorgesehenen, konusförmig ausgebildeten Dichtlippe, die auf der Rückseite des Bauteils verrastet und die Öffnung verschließt, wobei der freie Rand der Dichtlippe in montiertem Zustand insbesondere flächig auf der Rückseite des Bauteils anliegt.

Solche Dichtstopfen sind beispielsweise in der DE 10 2009 018 395 A1, der DE 34 46 151 A1 oder der DE 10 2009 032 243 A1 gezeigt.

Die Montage eines solchen Dichtstopfens erfolgt, indem dieser mit der konusförmigen Dichtlippe in die Öffnung eingeschoben wird, bis der freie Rand der Dichtlippe auf der Rückseite des Bauteils verrastet. Nach der Montage liegt die Dichtlippe um die Öffnung umlaufend an der Rückseite des Bauteils an und dichtet so die Öffnung ab. Da die Dichtlippe konusförmig ausgebildet ist und einen größeren Durchmesser aufweist als die Öffnung, wird die Dichtlippe während der Montage verformt. Abhängig von der Steifigkeit des Materials der Dichtlippe sowie dem Unterschied des Durchmessers der Dichtlippe und der Öffnung sind sehr hohe Montagekräfte erforderlich, um die Dichtlippe zu verformen und den Dichtstopfens in die Öffnung einzuschieben. Die Dichtlippe zu unterbrechen, um diese flexibler zu machen oder ein wellenförmiges Verformen zu verhindern, ist aber nicht möglich, da durch die Unterbrechungen die Dichtlippe nicht mehr umlaufend um die Öffnung anliegen und die Öffnung somit nicht mehr abdichten könnte.

Aufgabe der Erfindung ist es, einen Dichtstopfen bereitzustellen, der eine Montage mit einer geringeren Montagekraft ermöglicht, aber dennoch einen sicheren Halt des Dichtstopfens und eine zuverlässige Abdichtung der Öffnung bereitstellt.

Zur Lösung der Aufgabe ist bei einem Dichtstopfen der eingangs genannten Art an der Dichtlippe zumindest eine flexible Faltzone vorgesehen, die derart reversibel faltbar ist, dass in einem gefalteten Zustand der Faltzone der Umfang der Dichtlippe im Bereich der Faltzone und/oder des Randes der Dichtlippe reduziert ist. Die Dichtlippe ist in Umfangsrichtung vollständig geschlossen und kann somit umlaufend an der Öffnung anliegen und diese abdichten. Um die Montagekräfte zu verringern, ist aber mindestens eine Faltzone vorgesehen, in der die Dichtlippe bei der Montage derart zusammengefaltet werden kann, dass in einem gefalteten Zustand der Faltzone der Umfang der Dichtlippe verringert wird. Durch die Faltzone kann der Umfang der Dichtlippe mit einer wesentlich geringeren Kraft reduziert werden, da diese dem Zusammenfalten oder Verformen einen geringeren Widerstand entgegensetzt.

In nicht montiertem oder vollständig montiertem Zustand ist die Dichtlippe in Umfangsrichtung vollständig geschlossen, sodass eine zuverlässige Abdichtung der Öffnung möglich ist. In einem Zwischenmontagezustand ist die Dichtlippe in der Faltzone aber zusammengefaltet, sodass diese einen geringeren Durchmesser aufweist und mit einer geringeren Montagekraft in die Öffnung eingeschoben werden kann. Aufgrund der Faltzone erfolgt dieses Zusammenfalten gewissermaßen automatisch beim Einschieben des Dichtstopfens in die Öffnung, indem die Dichtlippe vom Rand der Öffnung verdrängt wird. Statt einer willkürlichen Verformung erfolgt also eine planmäßige Verformung, hier ein Faltung, an den Faltzonen. Die Faltzone weist beispielsweise Knickkanten auf, die eine Verformung mit einem wesentlich geringeren Kraftaufwand ermöglichen.

Durch das Zusammenfalten erhält der Konus der Dichtlippe eine größere Steigung, so dass der freie Rand der Dichtlippe einen geringen Umfang aufweist. Im Extremfall kann die Dichtlippe durch die Faltzone zu einem Zylinder umgeformt werden. Durch die Faltzonen kann der Umfang vorzugsweise wenigstens soweit verringert werden, dass dieser kleiner ist aus der Umfang der Öffnung. In jedem Fall kann die Dichtlippe durch die Faltzone mit geringerem Widerstand durch die Öffnung geschoben werden kann, da die Faltzone so ausgebildet ist, dass ein einfaches Zusammenfalten der Dichtlippe mit geringen Kräften möglich ist.

Auf der Rückseite der Öffnung kann sich die Faltzone anschließend wieder auseinanderfalten, sodass die Dichtlippe in Umfangsrichtung an der Rückseite der Öffnung anliegen kann.

Somit ist eine einfache Montage des Dichtstopfens möglich, da eine geringere Montagekraft erforderlich ist und gleichzeitig ist eine zuverlässige Abdichtung des Dichtstopfens sichergestellt ist.

Die Faltzone kann beispielsweise nach innen in Richtung zur Längsachse des Schaftes, insbesondere radial nach innen, gefaltet werden, sodass diese in zusammengefaltetem Zustand nicht über den Außenumfang der Dichtlippe vorsteht.

Je nach Größe der Faltzone erstreckt sich diese in zusammengefaltetem Zustand unterschiedlich weit nach innen in Richtung des Schaftes. Ist die Faltzone besonders groß ausgebildet oder die Dichtlippe sehr nah am Schaft angeordnet, kann es vorkommen, dass die Faltzone, wenn diese nach innen gefaltet wird, am Schaft anliegt, wodurch ein weiteres Zusammenfalten der Faltzone erschwert ist. Um dies auszuschließen, können am Schaft Aussparungen vorgesehen sein, in die sich die Faltzone in zusammengefaltetem Zustand erstreckt.

Der Schaft dichtet zusammen mit der Dichtfläche und der Dichtlippe die Öffnung ab. Um in eingebautem Zustand des Dichtstopfens die Öffnung vollständig abzudichten, ist insbesondere in einer Ausführungsform mit am Schaft vorgesehenen Aussparungen am Schaft im Bereich der zumindest einen Faltzone der Dichtlippe, insbesondere an den Aussparungen, zumindest eine zweite Faltzone vorgesehen. Diese zweite Faltzone schließt gewissermaßen die Aussparung im Schaft, so dass der Schaft in Umfangsrichtung vollständig geschlossen ist und die Öffnung abdichten kann. Die zweite Faltzone kann gemeinsam mit der ersten Faltzone nach innen, insbesondere radial nach innen gefaltet werden. Somit ist der Schaft in Umfangsrichtung geschlossen, und die Faltzone der Dichtlippe kann sich dennoch in gefaltetem Zustand in den Schaft erstrecken.

Vorzugsweise sind die erste und die zweite Faltzone miteinander verbunden, sodass beide Faltzonen zusammen nach innen gefaltet werden. Durch diese Verbindung ist zudem sichergestellt, dass der Dichtstopfen vollständig geschlossen ist und die Öffnung zuverlässig abdichten kann.

Die Faltzonen sind beispielsweise jeweils durch zwei Faltflächen gebildet, die im Wesentlichen dreieckig oder trapezförmig ausgebildet sind. Beide Faltflächen sind jeweils mit einem ersten Rand flexibel miteinander verbunden und mit einem zweiten Rand flexibel mit der Dichtlippe verbunden. In zusammengefaltetem Zustand können diese Faltflächen aneinander anliegen, sind aber zumindest gegeneinander um den gemeinsamen Rand aufeinander zu gefaltet.

Die Faltzonen können in nicht montiertem Zustand vollständig aufgefaltet sein. Es ist aber auch möglich, dass die Faltzonen in nicht montiertem Zustand nach innen vorgefaltet sind, wobei lediglich eine leichte Vorfaltung erforderlich ist. Durch diese Vorfaltung ist das Zusammenfalten der Faltzone beim Einschieben des Dichtstopfens in eine Öffnung vereinfacht.

Um die Dichtfläche stabiler zu gestalten, ist an der Dichtfläche beispielsweise zumindest eine Versteifungsrippe vorgesehen, die insbesondere an der zumindest einen Aussparung oder den zweiten Faltzonen am Schaft vorgesehen ist. Durch diese Versteifungsrippe ist zum einen die Dichtfläche abgestützt, so dass diese einem höheren Druck standhalten kann. Zum anderen ist der Schaft im Bereich der Aussparungen oder der zweiten Faltzonen verstärkt. Insbesondere ist die Versteifungsrippe im Querschnitt U-förmig ausgebildet, wobei die Schenkel dieses "U" jeweils an einem Rand der Aussparung mit dem Schaft verbunden sein können.

In dieser Ausführungsform faltet sich die Faltzone in die Versteifungsrippe hinein. Hierzu weist die Versteifungsrippe eine Art Aufnahmeraum auf, in den sich die erste und/oder die zweite Faltzone in gefaltetem Zustand erstrecken.

Um den Dichtstopfen einfacher montieren zu können, ist beispielsweise eine mittig angeordnete Druckfläche vorgesehen, und es erstreckt sich zumindest ein Steg vom Schaft bis zur Druckfläche. Durch diese Druckfläche kann bei der Montage des Dichtstopfens eine größere Montagekraft auf den Dichtstopfen aufgebracht werden. Dieser Steg kann beispielsweise auch durch eine Versteifungsrippe gebildet sein.

Um eine bessere Widerstandsfähigkeit gegen hohe Montagekräfte oder eine bessere Abdichtung bei großen Drücken zu erreichen, kann die Dichtfläche beispielsweise konvex nach außen gewölbt sein.

Um ein einfaches Einschieben des Dichtstopfens in die Öffnung zu ermöglichen, ist lediglich eine Faltzone erforderlich. Vorzugsweise sind aber mehrere, insbesondere gleichmäßig auf dem Umfang des Dichtstopfens verteilt angeordnete, erste und zweite Faltzonen vorgesehen, sodass die Dichtlippe und der Schaft gewissermaßen in mehrere Abschnitte unterteilt sind, die jeweils durch Faltzonen miteinander verbunden sind, so dass die Dichtlippe und der Schaft in Umfangsrichtung geschlossen sind. Im Bereich der Faltzonen kann jeweils eine Versteifungsrippe vorgesehen sein, wobei sich die Versteifungsrippen in einer solchen Ausführungsform vorzugsweise von einer mittig angeordneten Druckfläche sternförmig zu den Faltzonen erstrecken.

Bei einem solchen Dichtstopfen kann auch eine zweite Dichtlippe vorgesehen sein, die in montiertem Zustand des Dichtstopfens an der Vorderseite des Bauteils anliegt und die Öffnung abdichtet.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Dichtstopfens,
- Figur 2 eine perspektivische Ansicht der Unterseite des Dichtstopfens aus Figur 1,
- Figur 3 einen Querschnitt durch den Dichtstopfen aus Figur 1 in montiertem Zustand,
- Figur 4 eine erste Detailansicht der Faltzone der Dichtlippe des Dichtstopfens aus Figur 1,
- Figur 5 eine zweite Detailansicht der Faltzone der Dichtlippe des Dichtstopfens aus Figur 1
- Figur 6 eine Schnittansicht durch den Dichtstopfen aus Figur 1 im Bereich der Faltzonen, und
- Figur 7 eine zweite Schnittansicht durch den Dichtstopfen aus Figur 1.

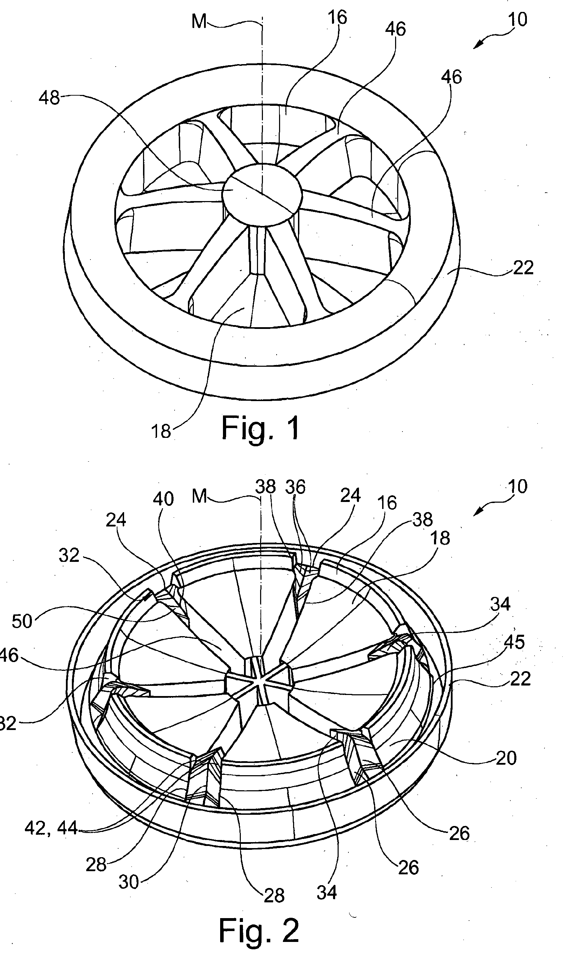

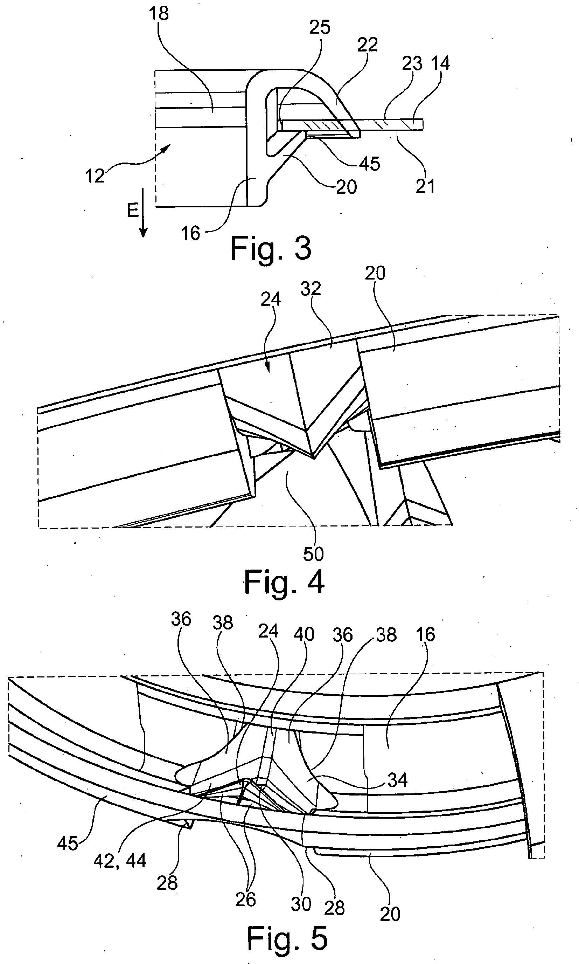

In den Figuren 1 und 2 ist ein Dichtstopfen 10 gezeigt, mit dem eine Öffnung 12 in einem Bauteil 14, beispielsweise einem Karosserieteil in einem Fahrzeug, abgedichtet werden kann (siehe Figur 3).

Der Dichtstopfen 10 weist einen im Wesentlichen ringförmigen Schaft 16 auf, der von einer kreisförmigen Dichtfläche 18 geschlossen ist. Am Außenumfang des Schaftes ist eine Dichtlippe 20 vorgesehen, die auf der Rückseite 21 des Bauteils 14 anliegen und so die Öffnung 12 abdichten kann (siehe auch Figur 3). Des Weiteren ist eine zweite Dichtlippe 22 vorgesehen, die entgegengesetzt zur ersten Dichtlippe 20 ausgerichtet ist und auf der Vorderseite 23 des Bauteils 14 anliegen und so die Öffnung 12 zusätzlich abdichten kann. Beide Dichtlippen 20, 22 sind konusförmig ausgebildet, wobei die zweite Dichtlippe 22 entgegengesetzt zur ersten Dichtlippe 20 ausgerichtet ist.

Zur Montage des Dichtstopfens 10 wird der Schaft 16 in einer Einschubrichtung E in die Öffnung 12 eingeschoben, wobei die Dichtlippe 20 vom Rand 25 der Öffnung 12 verdrängt und dabei so verformt wird, dass der Dichtstopfen 10 weiter in die Öffnung 12 eingeschoben werden kann.

Ist der Dichtstopfen 10 vollständig in die Öffnung 12 eingeschoben, kann sich die Dichtlippe 20 auf der Rückseite 21 des Bauteils 14 wieder in die ursprüngliche Form entfalten und in Umfangsrichtung umlaufend an der Rückseite 21 des Bauteils 14 anliegen und die Öffnung 12 abdichten. In diesem Zustand liegt die zweite Dichtlippe 22, insbesondere vorgespannt, auf der Vorderseite 23 des Bauteils 14 an und bildet eine zweite Dichtung.

Bei den bisher bekannten Dichtstopfen ist eine relativ hohe Montagekraft erforderlich, um die Dichtlippe 20 beim Einschieben in die Öffnung 12 zu verformen. Die Dichtlippe 20 wird durch den Rand 25 der Öffnung 12 zufällig, beispielsweise wellenförmig, verformt, wozu abhängig von der Steifigkeit der Dichtlippe 20 oder der Größe der Öffnung 12 sehr hohe Montagekräfte erforderlich sein können.

Um die Montagekräfte zu verringern, weist der erfindungsgemäße Dichtstopfen 10 mehrere in Umfangsrichtung gleichmäßig verteilte Faltzonen 24 an der Dichtlippe 20 auf.

Wie in Figur 2 zu sehen ist, ist jede dieser Faltzonen 24 durch zwei Faltflächen 26 gebildet, die in der hier gezeigten Ausführungsform im Wesentlichen trapezförmig ausgebildet sind. Ein ersten Rand 28 bildet eine im Wesentlichen in Einschubrichtung E verlaufende Knickkante, um die die Faltflächen 26 jeweils gegen die Dichtlippe 20 verschwenkt werden können. Die Faltflächen 26 sind mit einem dem ersten Rand 28 gegenüberliegenden zweiten Rand 30 miteinander verbunden und gegeneinander verschwenkbar. Die ersten und die zweiten Ränder 28, 30 sind jeweils im Wesentlichen in einer durch die Mittelachse M des Dichtstopfens 10 verlaufenden Ebene angeordnet.

Wie insbesondere in Figur 2 zu sehen ist, sind am Schaft jeweils im Bereich der Faltzonen 24 Aussparungen 32 vorgesehen, in welche sich die Faltzonen 24 bzw. die Faltflächen 26 bezüglich der Längsachse des Schaftes nach innen, insbesondere radial nach innen, falten können.

An den Aussparungen 32 sind zweite Faltzonen 34 vorgesehen, die ebenfalls jeweils aus zwei Faltflächen 36 bestehen, die mit einem ersten Rand 38 gelenkig mit dem Schaft 16 und mit einem gegenüberliegenden zweiten Rand 40 miteinander gelenkig verbunden sind.

Die Faltflächen 26, 36 der ersten Faltzonen 24 und der zweiten Faltzonen 34 sind jeweils mit ihren in Einschubrichtung E vorderen Rand 42, 44 miteinander verbunden, sodass die Aussparungen 32 vollständig geschlossen sind.

Wird der Dichtstopfen 10 in die Öffnung 12 eingeschoben, gelangt die Dichtlippe 20 mit dem Rand der Öffnung 12 in Anlage und wird von diesem radial nach innen gedrängt. Dadurch werden die Faltzonen 24 bezüglich der Mittelachse M radial nach innen zusammengefaltet, also die Faltflächen 26 gegeneinander bzw. gegen die Dichtlippe 20 verschwenkt. Durch die Faltzonen 26 wird die Dichtlippe 20 also gewissermaßen ziehharmonikaartig zusammengefaltet.

Der Umfang der Dichtlippe 20 wird dadurch im Bereich der Faltzonen 24 so reduziert, dass der Dichtstopfen 10 mit einem geringeren Widerstand in die Öffnung 12 eingeschoben werden kann. Im Extremfall kann die Dichtlippe 20 durch die Faltzonen derart verformt werden, dass diese einen zylindrischen Außenumfang aufweist oder zumindest einen kleineren Umfang aufweist als die Öffnung 12.

Des Weiteren sind, wie in den Figuren 1 und 2 zu sehen ist, Versteifungsrippen 46 vorgesehen, die sich von den Aussparungen 32 jeweils radial nach innen bis zu einer mittig angeordneten Druckfläche 48 erstrecken. Diese Versteifungsrippen 46 dienen dazu, die Dichtfläche 18 zu stabilisieren, sodass diese höheren Drücken oder höheren Montagekräften standhalten kann.

Die Versteifungsrippen 46 sind jeweils U-förmig ausgebildet, wobei in den Versteifungsrippen 46 jeweils ein Aufnahmeraum 50 für die Faltzonen 24, 34 gebildet ist. Wie insbesondere in Figur 2 zu sehen ist, schließen die Versteifungsrippen 46 unmittelbar an die Aussparungen 32 an, sodass die durch die Aussparungen 32 gebildeten Unterbrechungen im Schaft 16 zusätzlich stabilisiert und gegebenenfalls abgedichtet sind.

Wie in Figur 5 zu sehen ist, ist der freie Rand 45 der Dichtlippe 20 nicht Teil der Faltzone 24. Da dieser aber durchgehend mit der Faltzone 24 verbunden ist, wird der freie Rand 45 beim Zusammenfalten der Faltzone 24 mit dieser verformt und dabei vorgespannt.

Ist die Dichtlippe 20 vollständig in die Öffnung 12 eingeschoben, werden durch diese Vorspannung und/oder eine Vorspannung, die durch die Verschwenkung der Faltflächen 26 zueinander und gegenüber der Dichtlippe 20 entsteht, die Faltzonen 24 wieder in die ursprüngliche Form aufgefaltet, so dass der Durchmesser der Dichtlippe 20 wieder größer ist als der Durchmesser der Öffnung 12. Die Dichtlippe 20 kann anschließend umlaufend um die Öffnung 12 an der Rückseite 21 des Bauteils 14 anliegen und die Öffnung 14 abdichten.

Da der freie Rand 45 der Dichtlippe 20 nicht Teil der Faltzonen 24 ist, ist eine bessere Anlage der Dichtlippe 20 am Bauteil 14 und somit eine bessere Abdichtung der Öffnung 12 sichergestellt. Es ist aber auch denkbar, dass der freie Rand 45 der Dichtlippe 20 Teil der Faltzonen 24 ist.

Wie insbesondere in den Figuren 4 und 5 zu sehen ist, sind die Faltzonen 24, 34 in der hier gezeigten Ausführungsform geringfügig nach innen vorgefaltet, sodass diese bei der Montage des Dichtstopfens 10 leichter nach innen weggefaltet werden können.

Da durch die Faltzonen 24 der Widerstand gegen ein Zusammenfalten deutlich geringer ist, ist auch mit einem durchgehenden Rand 45 der Dichtlippe 20 die Montagekraft deutlich geringer.

Die Faltzonen 24 können abhängig von den gewünschten Montagekräften beliebig am Außenumfang der Dichtlippe 20 angeordnet sein. Es ist lediglich sicherzustellen, dass der Umfang der Dichtlippe 20 durch die Faltzonen 24 so reduziert werden kann, dass ein einfaches Einschieben des Dichtstopfens 10 in eine Öffnung 12 möglich ist. Je nach Abstand des Schaftes 16 von der Dichtlippe 20 ist es auch nicht erforderlich, dass am Schaft 16 Aussparungen 32 oder zweite Faltzonen 34 vorgesehen sind. Insbesondere sind auch keine Versteifungsrippen 46 erforderlich, falls die Dichtfläche 18 eine ausreichende Eigenstabilität aufweist.

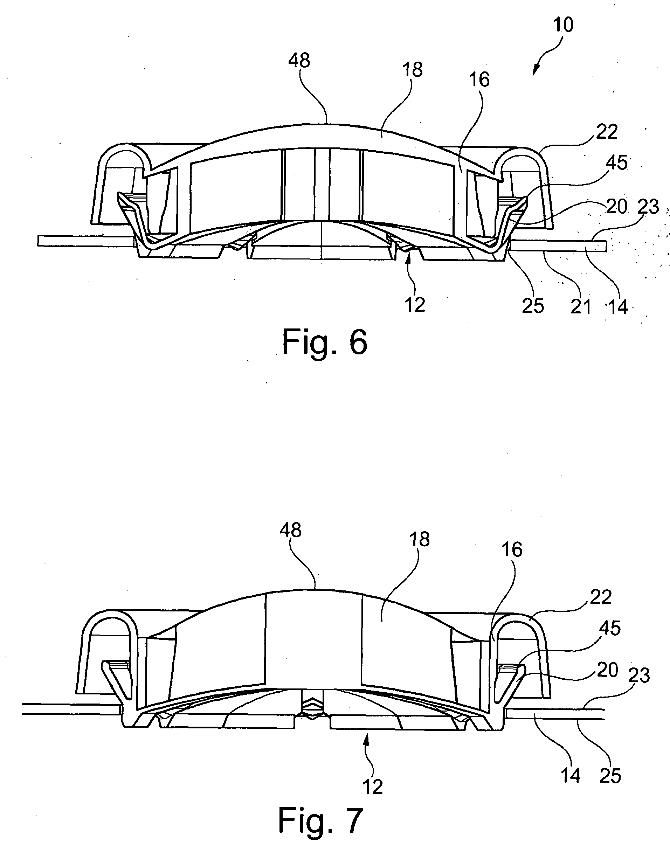

Um die Dichtfläche 18 zusätzlich widerstandsfähiger gegen große Drücke oder hohe Montagekräfte zu gestalten, ist, diese, wie in den Figuren 6 und 7 zu sehen ist, entgegen der Einschubrichtung E konvex gewölbt.

## Patentansprüche

1. Dichtstopfen (10) zur Abdichtung einer Öffnung (12) in einem Bauteil (14), mit einem im Wesentlichen ringförmigen oder zylindrischen Schaft (16), der von einer Dichtfläche (18) geschlossen ist, und einer am Schaft vorgesehenen, konusförmig ausgebildeten Dichtlippe (20), die auf der Rückseite des Bauteils (14) verrastet und die Öffnung (12) verschließt, wobei der freie Rand (44) der ersten Dichtlippe (20) in montiertem Zustand auf der Rückseite (21) des Bauteils (14) anliegt, **dadurch gekennzeichnet, dass** an der Dichtlippe (20) zumindest eine flexible Faltzone (24) vorgesehen ist, die derart reversibel faltbar ist, dass in einem gefalteten Zustand der Faltzone (24) der Umfang der Dichtlippe (20) im Bereich der Faltzone (24) und/oder des Randes (45) der Dichtlippe (20) reduziert ist.

2. Dichtstopfen nach Anspruch 1, **dadurch gekennzeichnet, dass** die Faltzone (24) nach innen in Richtung zur Längsachse des Schaftes (16), insbesondere radial nach innen, gefaltet werden kann.

3. Dichtstopfen nach Anspruch 1 oder 2, **dadurch gekennzeichnet, dass** am Schaft (16) zumindest eine Aussparung (32) vorgesehen ist, in die sich die Faltzone (24) in zusammengefaltetem Zustand erstreckt.

4. Dichtstopfen nach einem der vorhergehenden Ansprüche, **dadurch gekennzeichnet, dass** am Schaft (16) im Bereich der zumindest einen Faltzone (24), insbesondere an der zumindest einen Aussparung (32), zumindest eine zweite Faltzone (34) vorgesehen ist, die mit der ersten Faltzone (24) nach innen, insbesondere radial nach innen gefaltet werden kann.

5. Dichtstopfen nach Anspruch 4, **dadurch gekennzeichnet, dass** die erste Faltzone (24) und die zweite Faltzone (34) miteinander verbunden sind, sodass beide Faltzonen (24, 34) gemeinsam gefaltet werden.

6. Dichtstopfen nach einem der Ansprüche 4 oder 5, **dadurch gekennzeichnet, dass** die Faltzonen (24, 34) jeweils durch zwei Faltflächen (26, 36) gebildet sind, die im Wesentlichen dreieckig oder trapezförmig ausgebildet sind, wobei beide Faltflächen (26, 36) jeweils mit einem ersten Rand (30) flexibel miteinander verbunden sind und mit einem zweiten Rand (28) flexibel mit der Dichtlippe (20) verbunden sind.

7. Dichtstopfen nach Anspruch 6, **dadurch gekennzeichnet, dass** die Faltzonen (24, 34) in nicht montiertem Zustand nach innen vorgefaltet sind.

8. Dichtstopfen nach einem der vorhergehenden Ansprüche, **dadurch gekennzeichnet, dass** an der Dichtfläche (18) zumindest eine, insbesondere im Querschnitt U-förmig ausgebildete Versteifungsrippe (46) vorgesehen ist, die insbesondere an der zumindest einen Aussparung (32) oder der zumindest einen Faltzone (34) am Schaft (16) vorgesehen ist.

9. Dichtstopfen nach Anspruch 8, **dadurch gekennzeichnet, dass** die Versteifungsrippe (46) einen Aufnahmeraum (50) aufweist, in den sich die erste Faltzone (24) und/oder die zweite Faltzone (34) in gefaltetem Zustand erstreckt.

10. Dichtstopfen nach einem der Ansprüche 8 und 9, **dadurch gekennzeichnet, dass** eine mittig angeordnete Druckfläche (48) vorgesehen ist und sich die zumindest eine Versteifungsrippe (46) vom Schaft (16) bis zur Druckfläche (48) erstreckt.

11. Dichtstopfen nach einem der vorhergehenden Ansprüche, **dadurch gekennzeichnet, dass** die Dichtfläche (18) konvex gewölbt ist.

12. Dichtstopfen nach einem der vorhergehenden Ansprüche, **dadurch gekennzeichnet, dass** mehrere, insbesondere gleichmäßig auf dem Umfang des Dichtstopfens (10) verteilt angeordnete erste Faltzonen (24) und zweite Faltzonen (34) vorgesehen sind.

13. Dichtstopfen nach einem der vorhergehenden Ansprüche, **dadurch gekennzeichnet, dass** eine zweite Dichtlippe (22) vorgesehen ist, die in montiertem Zustand des Dichtstopfens (10) an der Vorderseite des Bauteils (14) anliegt und die Öffnung (12) abdichtet.

## Claims

1. A sealing plug (10) for sealing an opening (12) in a component (14), comprising a substantially annular or cylindrical shank (16) which is closed by a sealing surface (18), and a sealing lip (20) provided on the shank and having a cone-shaped configuration, the sealing lip locking in place on the rear side of the component (14) and closing the opening (12), the free edge (44) of the first sealing lip (20) being in contact with the rear side (21) of the component (14) in the assembled condition, **characterized in that** the sealing lip (20) has at least one flexible folding zone (24) provided thereon which is reversibly foldable such that in a folded condition of the folding zone (24), the circumference of the sealing lip (20) is reduced in the area of the folding zone (24) and/or of the edge (45) of the sealing lip (20).

2. The sealing plug according to claim 1, **characterized in that** the folding zone (24) can be folded inwards, in particular radially inwards, towards the longitudinal axis of the shank (16).

3. The sealing plug according to claim 1 or 2, **characterized in that** the shank (16) has at least one recess (32) provided thereon into which the folding zone (24) extends in the folded condition.

4. The sealing plug according to any of the preceding claims, **characterized in that** in the region of the at least one folding zone (24), in particular at the at least one recess (32), the shank (16) has at least one second folding zone (34) provided thereon which can be folded inwards, in particular radially inwards, with the first folding zone (24).

5. The sealing plug according to claim 4, **characterized in that** the first folding zone (24) and the second folding zone (34) are connected with each other, so that both folding zones (24, 34) are folded jointly.

6. The sealing plug according to either of claims 4 or 5, **characterized in that** the folding zones (24, 34) are each formed by two folding surfaces (26, 36) which are configured substantially triangular or trapezoidal, the two folding surfaces (26, 36) each having a first edge (30) by which they are flexibly connected with each other, and a second edge (28) by which they are flexibly connected with the sealing lip (20).

7. The sealing plug according to claim 6, **characterized in that** in a non-assembled condition the folding zones (24, 34) are pre-folded inwards.

8. The sealing plug according to any of the preceding claims, **characterized in that** the sealing surface (18) has at least one stiffening rib (46) provided thereon which more particularly is U-shaped in cross-section and which more particularly is provided at the at least one recess (32) or the at least one folding zone (34) on the shank (16).

9. The sealing plug according to claim 8, **characterized in that** the stiffening rib (46) includes a receiving space (50) into which the first folding zone (24) and/or the second folding zone (34) extend(s) in the folded condition.

10. The sealing plug according to either of claims 8 and 9, **characterized in that** a centrally arranged pressure surface (48) is provided and the at least one stiffening rib (46) extends from the shank (16) to the pressure surface (48).

11. The sealing plug according to any of the preceding claims, **characterized in that** the sealing surface (18) is convexly curved.

12. The sealing plug according to any of the preceding claims, **characterized in that** a plurality of first folding zones (24) and second folding zones (34) are provided which more particularly are arranged so as to be uniformly distributed on the circumference of the sealing plug (10).

13. The sealing plug according to any of the preceding claims, **characterized in that** a second sealing lip (22) is provided which, in the assembled condition of the sealing plug (10), rests against the front side of the component (14) and seals the opening (12).

## Revendications

1. Bouchon d'étanchéité (10) pour l'étanchement d'un orifice (12) dans un composant (14), présentant une tige (16) sensiblement annulaire ou cylindrique qui est fermée par une surface d'étanchéité (18), et une lèvre d'étanchéité (20) prévue sur la tige qui est réalisée en forme de cône et qui s'enclenche sur la face arrière du composant (14) et ferme l'orifice (12), le bord libre (44) de la première lèvre d'étanchéité (20) reposant à l'état monté sur la face arrière (21) du composant (14), **caractérisé en ce qu'**au moins une zone de pliage flexible (24) est prévue sur la lèvre d'étanchéité (20), laquelle est apte à être pliée de manière réversible de telle sorte que dans un état plié de la zone de pliage (24), la périphérie de la lèvre d'étanchéité (20) est réduite dans la région de la zone de pliage (24) et/ou du bord (45) de la lèvre d'étanchéité (20).

2. Bouchon d'étanchéité selon la revendication 1, **caractérisé en ce que** la zone de pliage (24) est apte à être pliée vers l'intérieur en direction de l'axe longitudinal de la tige (16), en particulier radialement vers l'intérieur.

3. Bouchon d'étanchéité selon la revendication 1 ou 2, **caractérisé en ce qu'**au moins un évidement (32) dans lequel la zone de pliage (24) s'étend à l'état plié est prévu sur la tige (16).

4. Bouchon d'étanchéité selon l'une des revendications précédentes, **caractérisé en ce qu'**au moins une deuxième zone de pliage (34) apte à être pliée vers l'intérieur, en particulier radialement vers l'intérieur ensemble avec la première zone de pliage (24) est prévue sur la tige (16) dans la région de ladite au moins une zone de pliage (24), en particulier au niveau dudit au moins un évidement (32).

5. Bouchon d'étanchéité selon la revendication 4, **caractérisé en ce que** la première zone de pliage (24) et la deuxième zone de pliage (34) sont reliées l'une à l'autre de sorte que les deux zones de pliage (24, 34) sont pliées ensemble.

6. Bouchon d'étanchéité selon l'une des revendications 4 ou 5, **caractérisé en ce que** les zones de pliage (24, 34) sont chacune formées par deux faces de pliage (26, 36) réalisées sensiblement en forme de triangle ou de trapèze, les deux surfaces de pliage (26, 36) étant respectivement reliées l'une à l'autre de manière flexible par un premier bord (30) et étant reliées de manière flexible à la lèvre d'étanchéité (20) par un deuxième bord (28).

7. Bouchon d'étanchéité selon la revendication 6, **caractérisé en ce qu'**à l'état non monté, les zones de pliage (24, 34) sont pré-pliées vers l'intérieur.

8. Bouchon d'étanchéité selon l'une des revendications précédentes, **caractérisé en ce qu'**au moins une nervure de raidissement (46) est prévue sur la surface d'étanchéité (18), laquelle est en particulier réalisée avec une section transversale en forme de U et est en particulier prévue au niveau dudit au moins un évidement (32) et de ladite au moins une zone de pliage (34) sur la tige (16).

9. Bouchon d'étanchéité selon la revendication 8, **caractérisé en ce que** la nervure de raidissement (46) présente un espace de logement (50) dans lequel la première zone de pliage (24) et/ou la deuxième zone de pliage (34) s'étendent à l'état plié.

10. Bouchon d'étanchéité selon l'une des revendications 8 et 9, **caractérisé en ce qu'**il est prévu une surface de pression (48) agencée au centre et **en ce que** ladite au moins une nervure de raidissement (46) s'étend de la tige (16) jusqu'à la surface de pression (48).

11. Bouchon d'étanchéité selon l'une des revendications précédentes, **caractérisé en ce que** la surface d'étanchéité (18) est courbe de manière convexe.

12. Bouchon d'étanchéité selon l'une des revendications précédentes, **caractérisé en ce qu'**il est prévu plusieurs premières zones de pliage (24) et plusieurs deuxièmes zones de pliage (34) qui sont en particulier agencées de manière à être régulièrement réparties sur la périphérie du bouchon d'étanchéité (10).

13. Bouchon d'étanchéité selon l'une des revendications précédentes, **caractérisé en ce qu'**il est prévu une deuxième lèvre d'étanchéité (22) qui, à l'état monté du bouchon d'étanchéité (10), repose sur la face avant du composant (14) et étanche l'orifice (12).
